(19) Europäisches Patentamt
European Patent Office
Office européen des brevets

(11) Numéro de publication : **0 522 891 A1**

(12) **DEMANDE DE BREVET EUROPEEN**

(21) Numéro de dépôt : **92401452.5**

(22) Date de dépôt : **27.05.92**

(51) Int. Cl.$^5$ : **A01N 25/02,** A01N 25/04

(30) Priorité : **09.07.91 FR 9109005**

(43) Date de publication de la demande : **13.01.93 Bulletin 93/02**

(84) Etats contractants désignés : **AT BE CH DE DK ES FR GB GR IT LI LU NL PT SE**

(71) Demandeur : **RHONE-POULENC CHIMIE**
**25, quai Paul Doumer**
**F-92408 Courbevoie Cédex (FR)**

(72) Inventeur : **Derian, Paul-Joel**
**56 Avenue Paul Langevin**
**F-92260 Fontenay-aux-Roses (FR)**
Inventeur : **Jost, Philippe**
**34 Rue de Torcy**
**F-75018 Paris (FR)**
Inventeur : **Guerin, Gilles**
**17 Avenue Edouard Detaille**
**F-95600 Eaubonne (FR)**

(74) Mandataire : **Seugnet, Jean Louis et al**
**RHONE-POULENC CHIMIE Direction de la Propriété Industrielle 25, Quai Paul Doumer**
**F-92408 Courbevoie Cedex (FR)**

(54) **Mélanges aqueux homogènes, stables et versables et utilisation desdits mélanges pour préparer des dispersions de substances insolubles dans l'eau.**

(57) La présente invention concerne des mélanges aqueux, homogènes, stables et versables qui sont susceptibles de former avec des substances insolubles dans l'eau des dispersions stables et versables.

Ils sont caractérisés en ce qu'ils comportent :

— au moins un dérivé soluble dans l'eau d'une matière active, phytosanitaire, ledit dérivé comportant au moins un groupement ionisable et au moins un groupement hydrophobe,

— au moins un tensio-actif non-ionique et/ou un alcool aliphatique, cycloaliphatique ou arylaliphatique, ayant de 4 à 15 atomes de carbone,

— et de l'eau en complément,

et en ce qu'ils présentent un seuil d'écoulement égal ou supérieur à 0,1 Pascal.

Un autre objet de l'invention est l'utilisation de ces mélanges pour préparer des dispersions aqueuses stables de substances insolubles dans l'eau, qui sont le plus souvent des matières actives phytosanitaires solides insolubles dans l'eau.

EP 0 522 891 A1

La présente invention concerne des mélanges aqueux, homogènes, stables et versables qui sont susceptibles de former avec des substances insolubles dans l'eau des dispersions stables et versables.

Lorsque l'on souhaite maintenir en dispersion dans l'eau des substances insolubles dans l'eau, il est nécessaire de préparer des formulations relativement complexes qui comportent outre l'eau et la substance insoluble, notamment divers tensio-actifs et un épaississant.

Il a maintenant été trouvé des mélanges aqueux, homogènes stables et versables, caractérisés en ce qu'ils comportent :

- au moins un dérivé soluble dans l'eau d'une matière active, phytosanitaire, ledit dérivé comportant au moins un groupement ionisable et au moins un groupement hydrophobe,
- au moins un tensio-actif non-ionique et/ou un alcool aliphatique, cycloaliphatique ou arylaliphatique, ayant de 4 à 15 atomes de carbone,
- et de l'eau en complément,

et en ce qu'ils présentent un seuil d'écoulement égal ou supérieur à 0,1 Pascal.

Les matières actives phytosanitaires, dont on utilise les dérivés solubles dans l'eau pour la préparation des mélanges de l'invention, sont très variées et ne peuvent être toutes citées.

Parmi les groupements ionisables des dérivés solubles, on peut citer à titre d'exemples non-limitatifs, les groupements carboxyliques salifiés, les autres groupements acides salifiés, les fonctions ammonium, les fonctions phosphonium.

Parmi les dérivés solubles dans l'eau des matières actives phytosanitaires, on peut notamment citer différentes familles.

Ainsi conviennent les dérivés solubles dans l'eau, obtenus par neutralisation au moins partielle des fonctions acides, par exemple par des hydroxydes de métaux alcalins tels que la potasse ou la soude par l'ammoniaque, par des amines et plus particulièrement des alcanolamines telles que la monoéthanolamine, la diéthanolamine ou la criéthanolamine, des matières actives phytosanitaires de formule générale (I) :

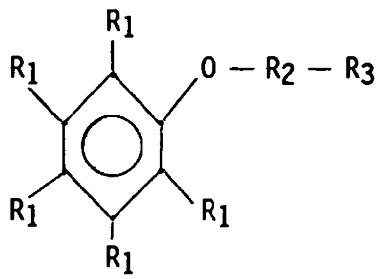

(I)

dans laquelle :

- les symboles $R_1$, identiques ou différents, représentent un atome d'hydrogène, un atome de chlore ou un groupement méthyle,
- le symbole $R_2$ représente un groupement alkylène linéaire ou ramifié ayant 1 à 4 atomes de carbone tel qu'éthylidène, méthylène, éthylène, triméthylène, tétraméthylène,
- le symbole $R_3$ représente -COOH ou -O-$SO_3$H.

Comme exemples de produits commerciaux de formule (I), on peut citer :

- le MECOPROP [acide (RS)-(chloro-4 orthotolyloxy)-2 propionique],
- le 2,4- D [acide (dichloro-2,4 phénoxy) acétique],
- le 2,4- DB [acide (dichloro-2,4 phénoxy)-4 butyrique],
- le 2,4- DES [hydrogénosulfate de (dichloro-2,4 phénoxy)-2 éthyle],
- LE DICHLORPROP [acide (dichloro-2,4 phénoxy)-2 propionique],
- le FENOPROP [acide (trichloro-2,4,5 phénoxy)-2 propionique],
- le MCPA [acide chloro-4 orthotolyloxyacétique],
- le MCPB [acide (chloro-4 orthotolyloxy)-4 butyrique],
- le 2,4,5- T (acide trichloro-2,4,5 phénoxy acétique).

Conviennent également bien les dérivés solubles dans l'eau, obtenus par neutralisation au moins partielle des fonctions acides, par exemple par des hydroxydes de métaux alcalins tels que la potasse ou la soude, par l'ammoniaque, par des amines et plus particulièrement des alcanolamines telles que la monoéthanolamine, la diéthanolamine ou la triéthanolamine, des matières actives phytosanitaires de formule générale (II) :

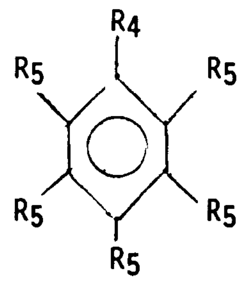

(II)

dans laquelle :

- le symbole $R_4$ représente -COOH ou $-CH_2-COOH$,
- les symboles $R_5$, identiques ou différents, représentent un atome d'hydrogène, un atome de chlore, un groupement $-NH_2$ ou un groupement méthoxy.

Comme exemples de produits commerciaux de formule (II), on peut citer :

- le CHLORAMBEN [acide amino-3 dichloro-2,5 benzoïque],
- le DICAMBA [acide dichloro-3,6 orthoanisique],
- le CHLORFENAC [acide (trichloro-2,3,6 phényl) acétique],
- le 2,3,6- TBA [acide trichloro-2,3,6 benzoïque].

Conviennent également pour les mélanges de l'invention les dérivés solubles dans l'eau, obtenus par neutralisation au moins partielle des fonctions acides, par exemple par des hydroxydes de métaux alcalins tels que la potasse ou la soude, par l'ammoniaque, par des amines et plus particulièrement des alcanolamines telles que la monoéthanolamine, la diéthanolamine ou la triéthanolamine, des matières actives phytosanitaires de formule générale (III) :

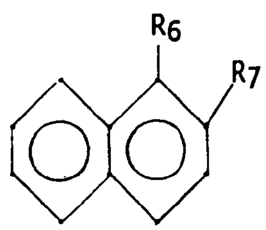

(III)

dans laquelle les symboles $R_6$ et $R_7$, identiques ou différents, représentent un atome d'hydrogène, un groupement -COOH, un groupement $-CH_2-COOH$ ou un groupement $-O-CH_2-COOH$.

Comme exemples de produits commerciaux de formule (III), on peut citer :

- l'acide (naphtyl-1) acétique,
- l'acide (naphtyl-2 oxy) acétique.

Conviennent également pour les mélanges de l'invention, les dérivés solubles dans l'eau, obtenus par neutralisation au moins partielle des fonctions acides, par exemple par des hydroxydes de métaux alcalins, par l'ammoniaque, par les amines comme indiqué précédemment, des matières actives phytosanitaires de formule générale (IV) :

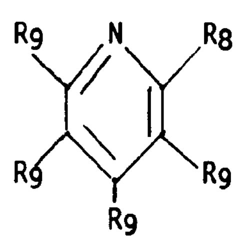

(IV)

dans laquelle :

- le symbole $R_5$ représente un groupement -COOH ou un groupement $-O-CH_2-COOH$,
- les symboles $R_9$, identiques ou différents, représentent un atome d'hydrogène, un atome de chlore ou un groupement $-NH_2$.

Comme exemples de produits commerciaux de formule (IV), on peut citer :

- le PICLORAM (acide amino-4 trichloro-3,5,6 picolinique),
- le TRICLOPYR (acide trichloro-3,5,6 pyridinyl-2 oxy acétique).

D'autres dérivés solubles dans l'eau de matières actives phytosanitaires ne correspondant pas aux formules générales (I) à (IV) peuvent également être utilisés ; les dérivés solubles peuvent soit être les matières actives citées elles-mêmes, soit les produits obtenus par neutralisation au moins partielle des éventuelles fonctions acides. Ces matières actives phytosanitaires sont par exemple :

- le BENAZOLIN [acide (chloro-4 dihydroxy-2,3 oxo-2 benzothiazol-1,3 yl-3) acétique],
- le BENOMYL [(butylcarbamoyl)-1 benzimidazolyl-2 carbamate de méthyle],
- le CHLORMEQUAT (chloro-2 éthyl triméthylammonium),
- l'acide chloracétique,
- le CHLORPHONIUM [tributyl (dichloro-2,4 benzyl) phosphonium],
- le DALAPON [acide dichloro-2,2 propionique],
- le DAMINOZIDE [acide N,N-diméthylaminosuccinamique],
- l'ENDOTHAL [acide oxo-7 bicyclo[2.2.1] heptane 2,3-dicarboxylique],
- le FOSETYL [hydrogéno-phosphonate d'éthyle],
- le PARAQUAT [diméthyl-1,1′ bipyridinium-4,4′],
- le QUIZALOFOP [acide (RS)-[(chloro-6 quinoxalinyl-2 oxy)-4 phénoxy]-2 propionique],
- le fluoroacétate de sodium.

On peut utiliser plusieurs dérivés solubles dans l'eau de matières actives phytosanitaires dans les mélanges de l'invention.

Parmi les tensio-actifs non-ioniques qui peuvent être utilisés dans les mélanges aqueux, homogènes, stables et versables de l'invention, on peut citer à titre non limitatif :

- les alcools gras éthoxylés ou éthoxy-proproxylés,
- les triglycérides éthoxylés ou éthoxy-propoxylés, .
- les acides gras éthoxylés ou éthoxy-propoxylés,
- les esters de sorbitan éthoxylés ou éthoxy-propoxylés,
- les amines grasses éthoxylées ou éthoxy-propoxylées,
- les di(phényl-1 éthyl) phénols éthoxylés ou éthoxy-propoxylés,
- les tri(phényl-1 éthyl) phénols éthoxylés ou éthoxy-propoxylés,
- les alkylphénols éthoxylés ou éthoxy-propoxylés.

Le nombre de motifs oxyéthylène (OE) et/ou oxypropylène (OP) de ces tensio-actifs non-ioniques varie habituellement de 2 à 100 selon le HLB (balance hydrophilie/lipophilie) souhaité.

De préférence le nombre de motifs OE et/ou OP se situe entre 2 et 50.

Les alcools gras éthoxylés ou éthoxy-propoxylés ont généralement de 6 à 22 atomes de carbone, les motifs OE et OP étant exclus de ces nombres, et sont de préférence éthoxylés.

Les triglycérides éthoxylés ou éthoxy-propoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco, et sont de préférence éthoxylés.

Les acides gras éthoxylés ou éthoxy-propoxylés sont des esters d'acides gras (tels que par exemple l'acide oléique, l'acide stéarique), et sont de préférence éthoxylés.

Les esters de sorbitan éthoxylés ou éthoxy-propoxylés sont des esters du sorbitol cyclisé d'acides gras de $C_{10}$ à $C_{20}$ comme l'acide laurique, l'acide stéarique ou l'acide oléique, et sont de préférence éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylèneglycol.

De même le terme acide gras éthoxylé inclut aussi bien les produits obtenus par éthoxylation d'un acide gras par l'oxyde d'éthylène que ceux obtenus par estérification d'un acide gras par un polyéthylèneglycol.

Les amines grasses éthoxylées ou éthoxy-propoxylées ont généralement de 10 à 22 atomes de carbone, les motifs OE et OP étant exclus de ces nombres, et sont de préférence éthoxylées.

Les alkylphénols éthoxylés ou éthoxy-propoxylés ont généralement 1 ou 2 groupes alkyles, linéaires ou ramifiés, ayant 4 à 12 atomes de carbone, notamment octyles, nonyles ou dodécyles.

A titre d'exemples de tensio-actifs non-ioniques du groupe des alkylphénols éthoxy ou éthoxy-propoxylés, des di(phényl-1 éthyl)phénols éthoxylés et des tri(phényl-1 éthyl)phénols éthoxy ou éthoxy-propoxylés, on peut citer :

- le di(phényl-1 éthyl)phénol éthoxylé avec 5 motifs OE,
- le di(phényl-1 éthyl)phénol éthoxylé avec 10 motifs OE,
- le tri(phényl-1 éthyl)phénol éthoxylé avec 16 motifs OE,

- le tri(phényl-1 éthyl)phénol éthoxylé avec 20 motifs OE,
- le tri(phényl-1 éthyl)phénol éthoxylé avec 25 motifs OE,
- le tri(phényl-1 éthyl)phénol éthoxylé avec 40 motifs OE,
- les tri(phényl-1 éthyl)phénols éthoxy-propoxylés avec 25 motifs OE + OP,
- le nonylphénol éthoxylé avec 2 motifs OE,
- le nonylphénol éthoxylé avec 4 motifs OE,
- le nonylphénol éthoxylé avec 6 motifs OE,
- le nonylphénol éthoxylé avec 9 motifs OE,
- les nonylphénols éthoxy-propoxylés avec 25 motifs OE + OP,
- les nonylphénols éthoxy-propoxylés avec 30 motifs OE + OP,
- les nonylphénols éthoxy-propoxylés avec 40 motifs OE + OP,
- les nonylphénols éthoxy-propoxylés avec 55 motifs OE + OP,
- les nonylphénols éthoxy-propoxylés avec 80 motifs OE + OP.

Les alcools qui peuvent être utilisés dans les mélanges aqueux, homogènes, stables et versables de l'invention, avec ou à la place des tensio-actifs non-ioniques sont de préférence des alcools aliphatiques à chaîne linéaire ou ramifiée ou des alcools cycloaliphatiques, ayant de 10 à 15 atomes de carbone.

A titre d'exemple non limitatifs de tels alcools, on peut citer par exemple le n.décanol, le n.dodécanol, le n.undécanol, le n.tridécanol, le n.tétradécanol, le n.pentadécanol et leurs isomères respectifs ramifiés, primaires, secondaires ou tertiaires.

On peut bien entendu utiliser plusieurs tensio-actifs non-ioniques, plusieurs alcools ou des mélanges tensio-actifs non-ioniques/alcools.

Les mélanges aqueux, homogènes, stables et versables de l'invention comportent généralement globalement de 1 % à 70 % en poids par rapport à leur poids total, de dérivé soluble dans l'eau de matières actives phytosanitaires, de tensio-actif non-ionique et/ou d'alcool, le reste étant constitué par de l'eau.

De préférence, le seuil d'écoulement de ces mélanges est égal ou supérieur à 0,2 Pascal.

Le rapport pondéral dérivé soluble de matière active phytosanitaire/tensio-actif non-ionique et/ou alcool est habituellement de 80/20 à 10/90 et de préférence de 70/30 à 20/80.

L'eau utilisée dans ces mélanges peut être de l'eau pure ou des solutions aqueuse de sels comme par exemple le chlorure de sodium

Les mélanges aqueux, homogènes, stables et versables de l'invention sont obtenus habituellement en dissolvant dans l'eau le ou les dérivés solubles de la matière active phytosanitaire.

On ajoute ensuite progressivement le tensio-actif non-ionique et/ou l'alcool jusqu'à obtention d'une biréfringence optique (caractéristique d'une phase mésomorphe non isotrope), telle que l'on peut la voir en polariseur croisé au microscope optique.

Ces mélanges aqueux, homogènes, stables et versables présentant une biréfringence optique, possédent des propriétés viscoélastiques telles qu'elles permettent la formation de dispersions stables de substances insolubles dans l'eau.

Un autre objet de l'invention est l'utilisation des mélanges aqueux, homogènes, stables et versables pour préparer des dispersions aqueuses stables de substances insolubles dans l'eau, qui sont le plus souvent des matières actives phytosanitaires solides insolubles dans l'eau.

Dans le présent texte, on entend par substance ou matière active insoluble dans l'eau une substance ou une matière active dont la solubilité dans l'eau à 20°C est inférieure à 5 grammes/litre.

Ces matières actives phytosanitaires peuvent être des insecticides, des germicides, des herbicides, des fongicides, des acaricides, des nématicides, des molluscicides, des rodenticides, des attractifs, des répulsifs ou des associations de plusieurs de ces composés.

Comme exemples non limitatifs de matières actives qui peuvent être mises en oeuvre dans les dispersions stables de l'invention, on peut citer :

- le diflufénican,
- la deltaméthrine,
- le propham,
- la tétraméthrine,
- le furalaxyl,
- l'heptachlor,
- le propanil,
- l'oxadiazon,
- le triflumizole,
- la diméthaméthrine,
- l'atrazine,

- le diuron,
- le néburon,
- le linuron,
- l'isoproturon,
- la simazine,
- l'améthryne,
- le phenmdipham,
- le pendiméthalin.

Dans les dispersions de matière active insoluble, dans les mélanges aqueux, homogènes, versables, la quantité de matière active insoluble en dispersion ne dépasse généralement pas 60 % en poids par volume total de la dispersion, afin de conserver le caractère versable de cette dispersion.

La limite inférieure n'est évidemment pas critique et selon les utilisations, on peut avoir des concentrations en matière active insoluble jusqu'à 0,1 % en poids par volume total de dispersion.

Les propriétés viscoélastiques des mélanges aqueux, homogènes, stables et versables utilisés pour mettre en dispersion des matières actives insolubles dans l'eau, permettent de s'affranchir de la présence des agents épaississants tels que des polysaccharides comme la gomme xanthane, qui sont habituellement présents dans les dispersions de ce type.

Les dispersions de l'invention peuvent par contre comporter les adjuvants habituels de ce genre de formulations tels que des antimousses comme les polyorganosiloxanes, un antigel comme le monopropylèneglycol ou le monoéthylèneglycol ou des conservateurs.

Les dispersions de matières actives phytosanitaires insolubles préparées à partir des mélanges aqueux, homogènes, stables et versables, sont elles-mêmes stables dans un domaine de température de - 5°C à + 45°C pendant plusieurs mois.

Elles ne font apparaître aucun phénomène de floculation, de cristallisation ou de sédimentation au stockage.

Elles peuvent être utilisées telles quelles ou après dilution à l'eau lors de leur mise en oeuvre.

Les exemples qui suivent illustrent l'invention.

Dans les exemples, a été mesuré le seuil d'écoulement qui est représentatif de la tension de cisaillement qu'il faut exercer sur le fluide pour le faire couler, ainsi que dans certains cas l'indice de pseudoplasticité qui est une bonne indication de l'aptitude à couler de la solution. Ces deux propriétés sont estimées par des mesures rhéologiques à l'aide d'un viscosimètre RHEOMAT 30 muni d'un système de mesure coaxial référencé A. Le seuil d'écoulement est calculé à partir des mesures par le modèle de BINGHAM.

Exemple 1

On dissout à température ambiante 8,11 g d'acide (chloro-4 orthotolyloxy)acétique (MCPA) dans 80,27 g d'une solution aqueuse (contenant 10 g/litre de chlorure de sodium) et 1,62 g de NaOH, afin de mettre le MCPA sous forme de son sel de sodium.

On ajoute à cette solution un alcool à chaîne linéaire comportant 10 à 12 atome de carbone (commercialisé sous la marque ALFOL) jusqu'à obtention d'une biréfringérence optique (observation au microscope optique).

Cette biréfringérence optique s'obtient par l'addition de 10 g de l'alcool en $C_{10}$ - $C_{12}$.

Le mélange obtenu est une solution limpide et incolore ayant un seuil d'écoulement supérieur à 0,2 Pa.

Il est demeuré stable plus de 6 mois à des cycles de températures de - 5°C, + 45°C.

Exemples 2 à 8

En opérant comme cela a été décrit dans l'exemple 1, on prépare les mélanges aqueux, homogènes, stables et versables dont les compositions sont indiquées dans le tableau 1 ci-après.

Tous ces mélanges sont des solutions limpides et incolores qui sont demeurées stables plus de 6 mois à des cycles de températures de - 5°C, + 45°C.

| Exemples | Dérivé soluble de matière active phytosanitaire | Alcool ou tensio-actif non-ionique | $H_2O$ (concentration en NaCl) | Seuil d'écoulement |
|---|---|---|---|---|
| Exemple 2 | MCPA 11,72 g<br>NaOH 2,34 g | ALFOL : 35,0 g | 50,94 g<br>(à 10 g/l) | > 0,2 Pa |
| Exemple 3 | MCPA 8,11 g<br>NaOH 1,62 g | *** SOPROPHOR BC2 : 12,0 g | 78,25 g<br>(à 10 g/l) | > 0,2 Pa |
| Exemple 4 | MCPA 13,02 g<br>NaOH 2,61 g | *** SOPROPHOR BC2 : 30,0 g | 54,32 g<br>(à 10 g/l) | > 0,2 Pa |
| Exemple 5 | 2,4-D* 8,11 g<br>KOH 2,05 g | ALFOL : 8,0 g | 81,84 g<br>(à 12,5 g/l) | > 0,2 Pa |
| Exemple 6 | 2,4-D* 14,07 g<br>KOH 3,57 g | ALFOL : 18,0 g | 64,36 g<br>(à 12,5 g/l) | > 0,2 Pa |
| Exemple 7 | MECOPROP** 17,0 g<br>KOH 4,43 g | ALFOL : 26,0 g | 52,57 g<br>(à 20 g/l) | > 0,2 Pa |
| Exemple 8 | MECOPROP** 25,49 g<br>KOH 6,65 g | ALFOL : 34,0 g | 33,86 g<br>(à 20 g/l) | > 0,2 Pa |

TABLEAU 1

* 2,4-D = acide (dichloro-2,4 phénoxy) acétique
** MECOPROP = acide (R,S)-(chloro-4 orthotolyloxy)-2 propionique
*** SOPROPHOR BC2 = nonyl phénol éthoxyle contenant en moyenne 2 motifs UE

Exemples 9 à 12

En opérant comme cela a été décrit dans l'exemple 1, on prépare les mélanges aqueux, homogènes, stables et versables, dont les compositions sont indiquées dans le tableau 2 ci-après.

Tous les mélanges obtenus sont des solutions limpides et incolores, qui sont demeurées stables plus de 6 mois à des cycles de températures de - 5°C, + 45°C.

En plus du seuil d'écoulement de ces mélanges, ont été également mesurés :

- l'indice de pseudo-viscosité $n = 1 + \frac{\log(\eta_1) - \log(\eta_2)}{\log(\gamma_1) - \log(\gamma_2)}$

$\eta_1$ = viscosité (Pa.s) à un gradiant de vitesse ($\gamma_1$) de 1 $s^{-1}$

$\eta_2$ = viscosité (Pa.s) à un gradiant de vitesse ($\gamma_2$) de 10 $s^{-1}$

- la viscosité en Pa.s (à un gradiant de vitesse de 10 $s^{-1}$)

| Exemples | Dérivé soluble de matière active phytosanitaire | Alcool ou tensio-actif non-ionique | H2O (avec 10 g/l NaCl) | Seuil d'écoulement | Indice de pseudo plasticité | Viscosité (en Pa.s) |
|---|---|---|---|---|---|---|
| Exemple 9 | 2,4-D 13,65 g<br>KOH 3,46 g | ALFOL : 20,0 g | 62,89 g | 1,67 | 0,65 | 2,7 |
| Exemple 10 | 2,4-D 8,09 g<br>KOH 2,05 g | ALFOL : 5,0 g | 84,86 g | 0,48 | 0,49 | 0,80 |
| Exemple 11 | MCPA 8,11 g<br>NaOH 1,62 g | SOPROPHOR BC2 : 13,0 g | 77,26 g | 1,51 | 0,39 | 0,59 |
| Exemple 12 | MCPA 12,17 g<br>NaOH 2,43 g | SOPROPHOR BC2 : 33,0 g | 52,41 g | 3,75 | 0,41 | 0,71 |

TABLEAU 2

Exemple 13

En opérant comme cela a été décrit dans l'exemple 1, on prépare un mélange aqueux, homogène, stable et versable de composition suivante :
- MECOPROP neutralisé par KOH : 15 g
- ALFOL : 12 g
- $H_2O$ (à 20 g/l de NaCl) : 73 g

Dans ce mélange limpide et incolore est mis en dispersion 1 g de DIFLUFENICAN, qui est un herbicide insoluble dans l'eau (solubilité à 20°C de 5 x $10^{-5}$ g/l).

La dispersion est stable plus de 6 mois dans un cycle de températures de - 5°C, + 45°C.

Exemple 14

En opérant comme cela a été décrit dans l'exemple 1, on prépare un mélange aqueux, homogène, stable et versable de composition suivante :
- MECOPROP neutralisé par KOH : 35 g
- ALFOL : 28 g
- $H_2O$ (à 20 g/l de NaCl) : 37 g

Dans ce mélange limpide et incolore est mis en dispersion 1 g de DIFLUFENICAN qui est un herbicide insoluble dans l'eau (solubilité à 20°C de 5 x $10^{-5}$ g/l).

La dispersion est stable plus de 6 mois dans un cycle de températures de - 5°C, + 45°C.

**Revendications**

**1 -** Mélange aqueux, homogène, stable et versable, caractérisé en ce qu'il comporte :
- au moins un dérivé soluble dans l'eau d'une matière active, phytosanitaire, ledit dérivé comportant au moins un groupement ionisable et au moins un groupement hydrophobe,
- au moins un tensio-actif non-ionique et/ou un alcool aliphatique, cycloaliphatique ou arylaliphatique, ayant de 4 à 15 atomes de carbone,
- et de l'eau en complément,

et en ce qu'il présente un seuil d'écoulement égal ou supérieur à 0,1 Pascal.

**2 -** Mélange selon la revendication 1, caractérisé en ce que le dérivé soluble dans l'eau est obtenu par neutralisation au moins partielle des fonctions acides, par des hydroxydes de métaux alcalins, par l'ammoniaque, par des amines et plus particulièrement des alcanolamines.
- des matières actives phytosanitaires de formule générale (I)

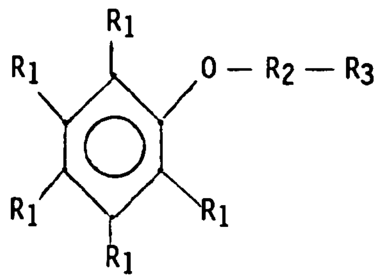

(I)

dans laquelle :
- les symboles $R_1$, identiques ou différents, représentent un atome d'hydrogène, un atome de chlore ou un groupement méthyle,
- le symbole $R_2$ représente un groupement alkylène linéaire ou ramifié ayant 1 à 4 atomes de carbone tel qu'éthylidène, méthylène, éthylène, triméthylène, tétraméthylène,
- le symbole $R_3$ représente -COOH ou -O-$SO_3$H ;
- des matières actives phytosanitaires de formule générale (II)

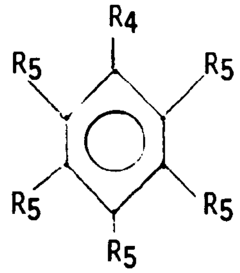

(II)

dans laquelle :

- le symbole $R_4$ représente -COOH ou $-CH_2-COOH$,
- les symboles $R_5$, identiques ou différents, représentent un atome d'hydrogène, un atome de chlore, un groupement $-NH_2$ ou un groupement méthoxy ;

- des matières actives phytosanitaires de formule générale (III) :

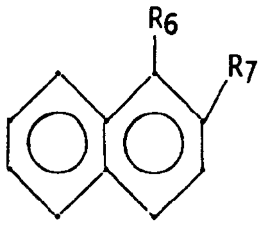

(III)

dans laquelle les symboles $R_6$ et $R_7$, identiques ou différents, représentent un atome d'hydrogène, un groupement -COOH, un groupement $-CH_2-COOH$ ou un groupement $-O-CH_2-COOH$ ;

- des matières actives phytosanitaires de formule générale (IV)

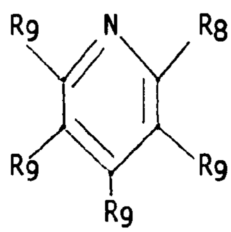

(IV)

dans laquelle :

- le symbole $R_6$ représente un groupement -COOH ou un groupement $-O-CH_2-COOH$,
- les symboles $R_9$, identiques ou différents, représentent un atome d'hydrogène, un atome de chlore ou un groupement $-NH_2$.

**3 -** Mélange selon la revendication 1, caractérisé en ce que le dérivé soluble dans l'eau est obtenu par neutralisation au moins partielle des fonctions acides présentes, par des hydroxydes de métaux alcalins, par l'ammoniaque, par des amines et plus particulièrement des alcanolamines des matières actives phytosanitaires suivantes :

- le MECOPROP [acide (RS)-(chloro-4 orthotolyloxy)-2 propionique],
- le 2,4- D [acide (dichloro-2,4 phénoxy) acétique],
- le 2,4- DB [acide (dichloro-2,4 phénoxy)-4 butyrique],
- le 2,4- DES [hydrogénosulfate de (dichloro-2,4 phénoxy)-2 éthyle],
- LE DICHLORPROP [acide (dichloro-2,4 phénoxy)-2 propionique],
- le FENOPROP [acide (trichloro-2,4,5 phénoxy)-2 propionique],
- le MCPA [acide chloro-4 orthotolyloxyacétique],
- le MCPB [acide (chloro-4 orthotolyloxy)-4 butyrique],
- le 2,4,5- T (acide trichloro-2,4,5 phénoxy acétique),
- le CHLORAMBEN [acide amino-3 dichloro-2,5 benzoïque],
- le DICAMBA [acide dichloro-3,6 orthoanisique],
- le CHLORFENAC [acide (trichloro-2,3,6 phényl) acétique],

- le 2,3,6- TBA [acide trichloro-2,3,6 benzoïque],
- l'acide (naphtyl-1) acétique,
- l'acide (naphtyl-2 oxy) acétique,
- le PICLORAM (acide amino-4 trichloro-3,5,6 picolinique),
- le TRICLOPYR (acide trichloro-3,5,6 pyridinyl-2 oxy acétique),
- le BENAZOLIN [acide (chloro-4 dihydroxy-2,3 oxo-2 benzothiazol-1,3 yl-3) acétique],
- le BENOMYL [(butylcarbamoyl)-1 benzimidazolyl-2 carbamate de méthyle],
- le CHLORMEQUAT (chloro-2 éthyl triméthylammonium),
- l'acide chloracétique,
- le CHLORPHONIUM [tributyl (dichloro-2,4 benzyl) phosphonium],
- le DALAPON [acide dichloro-2,2 propionique],
- le DAMINOZIDE [acide N,N-diméthylaminosuccinamique],
- l'ENDOTHAL [acide oxo-7 bicyclo[2.2.1] heptane 2,3-dicarboxylique],
- le FOSETYL [hydrogéno-phosphonate d'éthyle],
- le PARAQUAT [diméthyl-1,1′ bipyridinium-4,4′],
- le QUIZALOFOP [acide (RS)-[(chloro-6 quinoxalinyl-2 oxy)-4 phénoxy]-2 propionique],
- le fluoroacétate de sodium.

**4 -** Mélange selon l'une des revendications 1 à 3, caractérisé en ce que le tensio-actif non-ionique est choisi parmi :

- les alcools gras éthoxylés ou éthoxy-proproxylés,
- les triglycérides éthoxylés ou éthoxy-propoxylés,
- les acides gras éthoxylés ou éthoxy-propoxylés,
- les esters de sorbitam éthoxylés ou éthoxy-propoxylés,
- les amines grasses éthoxylées ou éthoxy-propoxylées,
- les di(phényl-1 éthyl) phénols éthoxylés ou éthoxy-propoxylés,
- les tri(phényl-1 éthyl) phénols éthoxylés ou éthoxy-propoxylés,
- les alkylphénols éthoxylés ou éthoxy-propoxylés.

**5 -** Mélange selon l'une des revendications 1 à 4, caractérisé en ce qu'il présente un seuil d'écoulement égal ou supérieur à 0,2 Pascal.

**6 -** Mélange selon l'une des revendications 1 à 5, caractérisé en ce que le rapport pondéral dérivé soluble de matière active phytosanitaire/tensio-actif non-ionique et/ou alcool est de 80/20 à 10/90 et de préférence de 70/30 à 20/80.

**7 -** Mélange selon l'une des revendications 1 à 6, caractérisé en ce que l'alcool utilisé est de préférence choisi parmi les alcools aliphatiques à chaîne linéaire ou ramifiée et les alcools cycloaliphatiques, ayant de 10 à 15 atomes de carbone.

**8 -** Mélange selon l'une des revendications 1 à 7, caractérisé en ce qu'il comporte globalement de 1 % à 70 % en poids par rapport à son poids total, de dérivé soluble dans l'eau de matières actives phytosanitaires, de tensio-actif non-ionique et/ou d'alcool, le reste étant constitué par de l'eau.

**9 -** Procédé de préparation d'un mélange selon l'une des revendications 1 à 8, caractérisé en ce que :

- l'on dissout dans l'eau le ou les dérivés solubles de la matière active phytosanitaire,
- l'on ajoute ensuite progressivement le tensio-actif non-ionique et/ou l'alcool jusqu'à obtention d'une biréfringence optique, telle que l'on peut la voir en polariseur croisé au microscope optique.

**10 -** Dispersion aqueuse stable d'au moins une substance insoluble dans l'eau, le plus souvent une matière active phytosanitaire solide insoluble dans l'eau préparée à l'aide du mélange selon l'une des revendications 1 à 8.

**11 -** Dispersion selon la revendication 10, caractérisée en ce que la substance insoluble dans l'eau est choisie parmi les matières actives phytosanitaires telles que des insecticides, des germicides, des herbicides, des fongicides, des acaricides, des nématicides, des molluscicides, des rodenticides, des attractifs, des répulsifs ou des associations de plusieurs de ces composés

**12 -** Dispersion selon l'une des revendications 10 ou 11, caractérisée en ce que la substance insoluble dans l'eau est choisie parmi :

- le diflufénican,
- la deltaméthrine,
- le propham,
- la tétraméthrine,
- le furalaxyl,
- l'heptachlor,
- le propanil,

- l'oxadiazon,
- le triflumizole,
- la diméthaméthrine,
- l'atrazine,
- le diuron,
- le néburon,
- le linuron,
- l'isoproturon,
- la simazine,
- l'améthryne,
- le phenmdipham,
- le pendiméthalin.

**13 -** Dispersion selon l'une des revendications 10 à 12, caractérisée en ce qu'elle comporte jusqu'à 60 % en poids de matière active insoluble par volume total de la dispersion.

Office européen des brevets

# RAPPORT DE RECHERCHE EUROPEENNE

Numero de la demande

EP 92 40 1452

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | CA-A-987 925 (CIBA-GEIGY CANADA)<br>* page 7, ligne 27 - page 8, ligne 12 *<br>* page 9, ligne 8 - page 10, ligne 17 *<br>*exemples*<br>*revendications*<br>--- | 1-8 | A01N25/02<br>A01N25/04 |
| X | US-A-3 764 293 (D.O. GUTH)<br>* exemple 3 *<br>--- | 1-8 | |
| X | FR-A-1 397 568 (ICI)<br>*résumé 1,8*<br>--- | 10-12 | |
| A | EP-A-0 388 239 (ALBRIGHT & WILSON)<br>* page 2, ligne 42 - page 5, ligne 39 *<br>--- | 1-12 | |
| A | FR-A-1 408 238 (AMCHEM PRODUCTS)<br>*résumé*<br>----- | 10-12 | |

DOMAINES TECHNIQUES RECHERCHES (Int. Cl.5 )

A01N

Le présent rapport a été établi pour toutes les revendications

| Lieu de la recherche | Date d'achèvement de la recherche | Examinateur |
|---|---|---|
| LA HAYE | 29 OCTOBRE 1992 | DECORTE D.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)